# EUROPÄISCHE PATENTSCHRIFT

(11) **EP 3 947 561 B1**
(45) Veröffentlichungstag und Bekanntmachung des Hinweises auf die Patenterteilung: **30.10.2024**
(21) Anmeldenummer: 20717789.0
(22) Anmeldetag: 27.03.2020
(51) Int. Cl.: C08L 67/02

(54) **POLYBUTYLENSUCCINAT UND POLYBUTYLENSUCCINAT-CO-ADIPAT UMFASSENDES VERBUNDMATERIAL SOWIE DIESES ENTHALTENDE KOMPOSTIERBARE ARTIKEL**
COMPOSITE MATERIAL COMPRISING POLYBUTYLENE SUCCINATE AND POLY(BUTYLENE SUCCINATE-CO-ADIPATE), AND COMPOSTABLE ARTICLE CONTAINING SAID COMPOSITE MATERIAL
MATÉRIAU COMPOSITE COMPRENANT UN POLY(BUTYLÈNE SUCCINATE) ET UN POLY(BUTYLÈNE SUCCINATE-CO-ADIPATE) AINSI QU'ARTICLE COMPOSTABLE CONTENANT CELUI-CI

(30) Priorität: 04.04.2019 DE 102019108905
(43) Veröffentlichungstag der Anmeldung: 09.02.2022
(73) Patentinhaber: SPC Sunflower Plastic Compound GmbH, 49681 Garrel (DE)
(72) Erfinder: MEYER, Sebastian, 58675 Hemer (DE); ALBERS, Stephan, 49413 Dinklage (DE)
(74) Vertreter: Eisenführ Speiser
(86) Internationale Anmeldenummer: PCT/EP2020/058724
(87) Internationale Veröffentlichungsnummer: WO 2020/201094

(56) Entgegenhaltungen:
- JP-A- 2007 002 011
- US-A1- 2016 185 955
- RELATORE PROF ET AL: "POLITECNICO DI TORINO Master of Science Thesis Polybutylene Succinate thermal and hydrolytic aging", 1 October 2017 (2017-10-01), XP055701390, Retrieved from the Internet <URL:http://webthesis.biblio.polito.it/6676/1/tesi.pdf>

## Beschreibung

Die vorliegende Erfindung betrifft einen Einwegartikel, umfassend oder bestehend aus einem Verbundmaterial oder Compound, umfassend eine Polymermischung oder Polymerblend, umfassend Polybutylensuccinat und Polybutylensuccinat-co-adipat sowie ein oder mehrere Füllstoffbestandteile, sowie Verfahren zur Herstellung des vorgenannten Verbundmaterials oder Compounds bzw. des vorgenannten Einwegartikels. Die Erfindung betrifft auch die Verwendung des Verbundmaterials oder Compounds zur Herstellung eines, insbesondere kompostierbaren, Einwegartikels.

Polybutylensuccinat ist ein Kunststoff, der aus 1,4-Butandiol und Bernsteinsäure hergestellt wird. Polybutylensuccinat hat äußerst nützliche mechanische Eigenschaften, die dem Polyethylen recht ähnlich sind, wie zum Beispiel ein geringes E-Modul und eine hohe Zähigkeit. Es ist auch bekannt, dass Polybutylensuccinat biologisch abbaubar ist, jedoch sind die dafür notwendigen Bedingungen, etwa die zum weitgehenden biologischen Abbau in praktisch nutzbaren Zeiträumen von ca. drei Monaten, jedenfalls von nicht mehr als einem Jahr, erforderlichen Temperaturen für eine umfangreiche Nutzung als kompostierbarer Werkstoff nicht optimal.

Seit einiger Zeit wird auch ein Copolymer des Polybutylensuccinats für den Einsatz als kompostierbarer Kunststoff untersucht, das Polybutylensuccinat-co-adipat. (auch bezeichnet als "Poly(butylen succinat-co-adipat)" oder "Poly(1,4-butylen adipat-co-1,4-butylen succinat)"). In diesem Copolymer des Polybutylensuccinats liegen Monomereinheiten vor, welche aus Estern von Bernsteinsäure-Resten mit Butandiol-Resten gebildet sind sowie Monomereinheiten, welche aus Estern von Adipinsäure-Resten mit Butandiol-Resten gebildet sind. Polybutylensuccinat-co-adipat weist ähnliche mechanische Eigenschaften wie Polybutylensuccinat, auf, jedoch z.B. eine geringere Zugfestigkeit. Dafür ist bekannt, dass Polybutylensuccinat-co-adipat besser biologisch abbaubar ist als Polybutylensuccinat (vgl. etwa M. Puchalski et al., Polymers 2018, 10, 251-262). Weiterführende Informationen zu Strukturen und Eigenschaften von Polybutylensuccinat und Polybutylensuccinat-co-adipat finden sich auch in dem Buch "Synthetic Biodegrable Polymers", B. Rieger et al., Springer Science & Business Media, 2012.

Im Stand der Technik findet man bereits Vorschläge für die Kombination von Polybutylensuccinat oder von Polybutylensuccinat-co-adipat mit anderen polymeren Verbindungen, um deren Eigenschaften für bestimmte Anwendungen jeweils zu modifizieren. Bekannt sind z.B. Kombinationen mit Stärke, Polymilchsäure (Polylactid) oder Poly(butylen adipatco-terephthalat).

Das Dokument WO 99/45067 A1 betrifft eine Polymilchsäure-Zusammensetzung und einen daraus hergestellten Film. Das Dokument JP 2007 002011 A offenbart biologisch abbaubare Polymerfilmen. In den Beispielen 4 und 13 werden Zusammensetzungen offenbart, die ein 50/50 Blend aus PBS und PBSA, Talkum (Beispiel 4) bzw. Calciumcarbonat (Beispiel 13) enthält.

Es war eine primäre Aufgabe der vorliegenden Erfindung, einen Einwegartikel bereitzustellen, umfassend ein Material, das hervorragende mechanische Eigenschaften (v.a. hohe Zähigkeit, Festigkeit und Zugfestigkeit) und gute Formbarkeit aufweist, verbunden mit einer besonders guten biologischen Abbaubarkeit, auch bei vergleichsweise niedrigen Temperaturen, etwa ≤ 50 °C, und welches sich in ausgezeichneter Weise für die Herstellung von kompostierbaren Artikeln wie Einwegartikeln, oder von mittel- oder langfristig verrottbaren Artikeln eignet. Eine weitere, spezifische, Aufgabe der vorliegenden Erfindung war es, Verfahren für die Herstellung eines solchen Einwegartikels zur Verfügung zu stellen Es wurde nun überraschenderweise gefunden, dass die primäre Aufgabe sowie weitere Aufgaben und/oder Teilaufgaben der vorliegenden Erfindung gelöst werden durch einen Einwegartikel wie in den beigefügten Ansprüchen definiert, umfassend oder bestehend aus einem Verbundmaterial oder Compound, umfassend als Polymerbestandteil eine Polymermischung oder ein Polymerblend, umfassend
- Polybutylensuccinat
   und
- Polybutylensuccinat-co-adipat.

In eigenen Untersuchungen hat sich gezeigt, dass eine Polymermischung oder ein Polymerblend umfassend die beiden Bestandteile Polybutylensuccinat und Polybutylensuccinat-co-adipat, sich ausgezeichnet zu Compounds oder Verbundmaterialien verarbeiten lässt, welche gut zu formen sind, wobei die Eigenschaften der Polymermischung oder des Polymerblends durch Variation der Anteile an Polybutylensuccinat bzw. Polybutylensuccinat-co-adipat in praxisrelevanter Weise vorteilhaft gezielt variiert werden können. Weiter wurde in eigenen Untersuchungen gefunden, dass ein aus einer vorgenannten Polymermischung bzw. einem vorgenannten Polymerblend hergestelltes Verbundmaterial oder Compound, bzw. ein aus diesem hergestellter Artikel bzw. Einwegartikel, wesentlich besser biologisch abbaubar ist, als ein zum Vergleich betrachtetes Homopolymer von Polybutylensuccinat (bzw. ein aus diesem Homopolymer hergestelltes Verbundmaterial oder Compound).

Die Erfindung sowie erfindungsgemäß bevorzugte Kombinationen bevorzugter Parameter, Eigenschaften und/oder Bestandteile der vorliegenden Erfindung sind in den beigefügten Ansprüchen definiert. Bevorzugte Aspekte der vorliegenden Erfindung werden auch in der nachfolgenden Beschreibung sowie in den Beispielen angegeben bzw. definiert.

Im Sinne der vorliegenden Erfindung und wie auf dem Fachgebiet üblich, wird unter einer Polymermischung oder einem Polymerblend eine physikalische Mischung von zwei oder mehr (im Fall der vorliegenden Erfindung insbesondere von zwei) Basis-Polymeren verstanden. Vorzugsweise entsteht auf diese Weise eine Mischung, worin die zwei Basis-Polymere molekular verteilt bzw. mikroskopisch dispergiert sind. Eine solche Polymermischung oder ein solcher Polymerblend wird daher auch als "Polymerlegierung" bezeichnet. Vorzugsweise werden in einer solchen Polymermischung bzw. in einem solchen Polymerblend keine neuen chemischen Bindungen zwischen den beteiligten Basis-Polymeren gebildet. Die Eigenschaften einer solchen Polymermischung bzw. eines solchen Polymerblends können sich dennoch unterscheiden von den Eigenschaften bzw. den rein additiven Eigenschaften der beteiligten Basis-Polymere. Die hier eingesetzte Polymermischung bzw. der hier eingesetzte Polymerblend kann auf dem Fachmann an sich bekannte Weise hergestellt werden, beispielsweise durch Compoundierung der beteiligten Basis-Polymere, Polybutylensuccinat und Polybutylensuccinat-co-adipat. Im vorliegenden Text werden die Ausdrücke "Polymermischung" und "Polymerblend" synonym verwendet.

Bevorzugt ist eine vorstehend beschriebene, im erfindungsgemäßen Einwegartikel eingesetzte Polymermischung oder entsprechender Polymerblend, wobei das Massenverhältnis des in der Polymermischung oder dem Polymerblend vorliegenden Polybutylensuccinats (nachfolgend auch bezeichnet als "PBS") zu dem in der Polymermischung oder dem Polymerblend vorliegenden Polybutylensuccinat-co-adipat (nachfolgend auch bezeichnet als "PBSA") im Bereich von 10 : 90 bis 90 : 10, vorzugsweise von 20 : 80 bis 80 : 20, mehr bevorzugt von 30 : 70 bis 70 : 30, besonders bevorzugt von 40 : 60 bis 60 : 40 und ganz besonders bevorzugt von 45 : 55 bis 55 : 45 liegt. In einer besonders bevorzugten Ausgestaltung der vorliegenden Erfindung liegt das Massenverhältnis des in der o.g. Polymermischung oder dem o.g. Polymerblend vorliegenden PBS zu dem in der Polymermischung oder dem Polymerblend vorliegenden PBSA bei 50 : 50 (bzw. 1 : 1).

Durch die Variation der Massenverhältnisse des in der Polymermischung oder in dem Polymerblend vorliegenden PBS zu dem in der Polymermischung oder dem Polymerblend vorliegenden PBSA, vorzugsweise innerhalb der vorstehend angegebenen Bereiche, lässt sich die biologische Abbaugeschwindigkeit bzw. die Kompostiergeschwindigkeit der im erfindungsgemäßen Einwegartikel eingesetzten Polymermischung oder des entsprechenden Polymerblends bzw. eines diese Polymermischung oder diesen Polymerblend enthaltenden Verbundmaterials oder Compounds (bzw. eines die vorgenannten Materialien enthaltenden Artikels) einstellen und gezielt auf den jeweils gewünschten Einsatzzweck der Polymermischung oder des Polymerblends abstimmen.

So wird beispielsweise eine Polymermischung oder ein Polymerblend, worin das Massenverhältnisse des darin vorliegenden PBS zu dem darin vorliegenden PBSA 30 : 70 beträgt, schneller biologisch abgebaut im Vergleich zu einer Polymermischung oder einem Polymerblend, worin das Massenverhältnisse des darin vorliegenden PBS zu dem darin vorliegenden PBSA 50 : 50 beträgt, so dass sich eine solche Polymermischung bzw. ein solcher Polymerblend als Ausgangsstoff v.a. für die Herstellung von Artikeln bzw. Einwegartikeln eignet, die nach verhältnismäßig kurzer Zeit verrotten sollen, etwa Einweg-Pflanztöpfe.

Hingegen wird beispielsweise eine Polymermischung oder ein Polymerblend, worin das Massenverhältnisse des darin vorliegenden PBS zu dem darin vorliegenden PBSA 70 : 30 beträgt, langsamer biologisch abgebaut im Vergleich zu einer Polymermischung oder einem Polymerblend, worin das Massenverhältnisse des darin vorliegenden PBS zu dem darin vorliegenden PBSA 50 : 50 beträgt, so dass sich eine solche Polymermischung bzw. ein solcher Polymerblend v.a. als Ausgangsstoff für die Herstellung von Artikeln bzw. Einwegartikeln eignet, die nach verhältnismäßig längerer Zeit verrotten sollen, etwa Verbissschutz an Bäumen.

Bevorzugt ist daher auch eine im erfindungsgemäßen Einwegartikel eingesetzte Polymermischung bzw. ein entsprechender Polymerblend oder eine in diesem Text als bevorzugt beschriebene Polymermischung oder ein Polymerblend, wobei das Massenverhältnis des in der Polymermischung oder dem Polymerblend vorliegenden Polybutylensuccinats zu dem in der Polymermischung oder dem Polymerblend vorliegenden Polybutylensuccinat-co-adipat:
- im Bereich von 10 : 90 bis 40 : 60, vorzugsweise von 10 : 90 bis 35 : 65 und besonders bevorzugt von 20 : 80 bis 35 : 65, liegt
   oder
- im Bereich von 90 : 10 bis 60 : 40, vorzugsweise von 90 : 10 bis 65 : 35 und besonders bevorzugt von 80 : 20 bis 65 : 35, liegt.

Bevorzugt ist eine vorstehend beschriebene, im erfindungsgemäßen Einwegartikel eingesetzte Polymermischung oder ein entsprechender Polymerblend (oder eine in diesem Text als bevorzugt beschriebene Polymermischung oder ein Polymerblend) wobei
- das Polybutylensuccinat Strukturbestandteile (Monomere) der Formel I 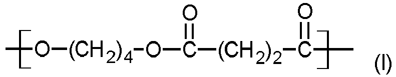 umfasst
   und/oder (vorzugsweise "und")
- das Polybutylensuccinat-co-adipat Strukturbestandteile der Formel II 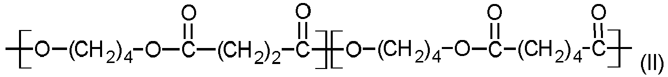 umfasst.

Die Strukturbestandteile der Formel II stellen dabei Kombinationen von zwei (jeweils in eckigen Klammern gefassten) Comonomeren dar, welche (i) auf durch eine Esterbindung miteinander verknüpften Resten von 1,4-Butandiol und Bernsteinsäure basieren und (ii) auf durch eine Esterbindung miteinander verknüpften Resten von 1,4-Butandiol und Adipinsäure basieren. Das Comonomer, welches auf durch eine Esterbindung miteinander verknüpften Resten von 1,4-Butandiol und Bernsteinsäure basiert, entspricht dabei dem oben angegebenen Strukturbestandteil (Monomer) der Formel (I).

Das im erfindungsgemäßen Einwegartikel einzusetzende Polybutylensuccinat und das im erfindungsgemäßen Einwegartikel einzusetzende Polybutylensuccinat-co-adipat können jeweils unabhängig voneinander (abhängig von den jeweils angewendeten Herstellungsbedingungen) in einer linearen Polymerstruktur bzw. Copolymerstruktur (unverzweigt) oder in einer verzweigten Polymerstruktur bzw. Copolymerstruktur vorliegen.

Bevorzugt ist auch eine vorstehend beschriebene, im erfindungsgemäßen Einwegartikel eingesetzte Polymermischung oder Polymerblend (oder eine ein in diesem Text als bevorzugt beschriebene entsprechende Polymermischung oder Polymerblend) wobei das in der Polymermischung oder dem Polymerblend vorliegende Polybutylensuccinat und/oder das in der Polymermischung oder dem Polymerblend vorliegende Polybutylensuccinat-co-adipat jeweils unabhängig voneinander
- eine gewichtsmittlere Molmasse M_{w} im Bereich von 50000 bis 150000, vorzugsweise im Bereich von 75000 bis 140000, aufweist
   und/oder
- eine Schmelz-Massefließrate MFR im Bereich von 0,5 bis 50 g/10 min, vorzugsweise von 1 bis 40 g/10 min, aufweist, bestimmt nach DIN EN ISO 1133-1:2011, Verfahren A.

Die vorgenannte Schmelze-Massefließrate MFR wird im Rahmen der vorliegenden Erfindung vorzugsweise bei einer Temperatur von 190 °C und einer Prüflast ("load") von 2.16 kg bestimmt. Vorzugsweise werden alle im Rahmen dieser Erfindung angegebenen Schmelze-Massefließraten MFR bestimmt nach DIN EN ISO 1133-1:2011, Verfahren A sowie bei einer Temperatur von 190 °C und einer Prüflast ("load") von 2.16 kg.

Die vorliegende Erfindung betrifft insbesondere einen Einwegartikel, umfassend oder bestehend aus einem Verbundmaterial oder Compound, umfassend
- als Polymerbestandteil
   - Polybutylensuccinat (wie vorstehend beschrieben bzw. definiert) und Polybutylensuccinat-co-adipat (wie vorstehend beschrieben bzw. definiert),
      und/oder (vorzugsweise "oder")
   - eine vorstehend beschriebene erfindungsgemäße Polymermischung oder einen Polymerblend (oder eine in diesem Text als bevorzugt beschriebene erfindungsgemäße Polymermischung oder Polymerblend),
   in einer Gesamtmenge im Bereich von 30 bis 75 Massen-%, bevorzugt von 35 bis 70 Massen-%, bezogen auf die Gesamtmasse des Verbundmaterials oder Compounds,
   und
- organische und anorganische Füllstoffbestandteile, wie nachfolgend und wie in den beigefügten Ansprüchen definiert.

Hinsichtlich bevorzugter Ausgestaltungen eines hiervorgenannten, im erfindungsgemäßen Einwegartikel eingesetzten Verbundmaterials oder Compounds, gelten die für die im erfindungsgemäßen Einwegartikel eingesetzte Polymermischung oder den entsprechenden Polymerblend vorstehend angegebenen Erläuterungen, insbesondere betreffend mögliche bevorzugte Ausführungsformen und mögliche bzw. bevorzugte Kombinationen, entsprechend (gegebenenfalls sinngemäß), und umgekehrt.

Das Massenverhältnis des in dem o.g. Polymerbestandteil des Verbundmaterials oder Compounds vorliegenden Polybutylensuccinats zu dem in dem Polymerbestandteil des Verbundmaterials oder Compounds vorliegenden Polybutylensuccinat-co-adipat liegt demgemäß vorzugsweise ebenfalls im Bereich von 10 : 90 bis 90 : 10, mehr bevorzugt von 20 : 80 bis 80 : 20, besonders bevorzugt von 30 : 70 bis 70 : 30, ganz besonders bevorzugt von 40 : 60 bis 60 : 40 und noch mehr bevorzugt von 45 : 55 bis 55 : 45.

Allgemein bezeichnet im Rahmen der vorliegenden Erfindung der Ausdruck "ein in dem Polymerbestandteil des erfindungsgemäßen Verbundmaterials oder Compounds vorliegendes Polybutylensuccinat" sowohl ein in dem (im erfindungsgemäßen Einwegartikel eingesetzten) Verbundmaterial oder Compound separat (einzeln) vorliegendes Polybutylensuccinat als auch ein in dem (im erfindungsgemäßen Einwegartikel eingesetzten) Verbundmaterial oder Compound in Form einer Polymermischung oder eines Polymerblends vorliegendes Polybutylensuccinat (d.h. als Basis-Polymer-Bestandteil einer Polymermischung oder eines Polymerblends). Entsprechendes gilt für den Ausdruck "ein in dem Polymerbestandteil des erfindungsgemäßen Verbundmaterials oder Compounds vorliegendes Polybutylensuccinat-co-adipat".

In einer bevorzugten Ausgestaltung der vorliegenden Erfindung liegt das Massenverhältnis des in dem o.g. Polymerbestandteil des Verbundmaterials oder Compounds vorliegenden Polybutylensuccinats zu dem in dem Polymerbestandteil des Verbundmaterials oder Compounds vorliegenden Polybutylensuccinat-co-adipat
- im Bereich von 10 : 90 bis 40 : 60, vorzugsweise von 10 : 90 bis 35 : 65 und besonders
   bevorzugt von 20 : 80 bis 35 : 65,
   oder
- im Bereich von 90 : 10 bis 60 : 40, vorzugsweise von 90 : 10 bis 65 : 35 und besonders bevorzugt von 80 : 20 bis 65 : 35.

Wie vorstehend angegeben, eignet sich ein im erfindungsgemäßen Einwegartikel eingesetztes Verbundmaterial oder Compound, worin das Massenverhältnis des in dem Polymerbestandteil vorliegenden Polybutylensuccinats zu dem in dem Polymerbestandteil vorliegenden Polybutylensuccinat-co-adipat im Bereich von 10 : 90 bis 40 : 60, vorzugsweise von 10 : 90 bis 35 : 65 und besonders bevorzugt von 20 : 80 bis 35 : 65 liegt vorzugsweise zur Herstellung von verhältnismäßig rasch biologisch abbaubaren Artikeln oder Einwegartikeln.

Dagegen eignet sich ein im erfindungsgemäßen Einwegartikel eingesetztes Verbundmaterial oder Compound, worin das Massenverhältnis des in dem Polymerbestandteil vorliegenden Polybutylensuccinats zu dem in dem Polymerbestandteil vorliegenden Polybutylensuccinat-co-adipat im Bereich von 90 : 10 bis 60 : 40, vorzugsweise von 90 : 10 bis 65 : 35 und besonders bevorzugt von 80 : 20 bis 65 : 35 liegt vorzugsweise zur Herstellung von verhältnismäßig langsam biologisch abbaubaren Artikeln oder Einwegartikeln.

Die gewichtsmittlere Molmasse M_{w} des in dem o.g. Polymerbestandteil des Verbundmaterials oder Compounds vorliegenden Polybutylensuccinats liegt vorzugsweise im Bereich von 50000 bis 150000, vorzugsweise von 75000 bis 140000. Die gewichtsmittlere Molmasse M_{w} des in dem Polymerbestandteil des erfindungsgemäßen Verbundmaterials oder Compounds vorliegenden Polybutylensuccinat-co-adipats liegt ebenfalls vorzugsweise im Bereich von 50000 bis 150000, vorzugsweise im Bereich von 75000 bis 140000.

Die Schmelze-Massefließrate MFR des in dem o.g. Polymerbestandteil des Verbundmaterials oder Compounds vorliegenden bzw. einzusetzenden Polybutylensuccinats liegt vorzugsweise im Bereich von 0,5 bis 50 g/10 min, besonders bevorzugt von 1 bis 40 g/10 min. Die Schmelze-Massefließrate MFR des in dem Polymerbestandteil des erfindungsgemäßen Verbundmaterials oder Compounds vorliegenden bzw. einzusetzenden Polybutylensuccinat-co-adipats liegt ebenfalls vorzugsweise im Bereich von 0,5 bis 50 g/10 min, besonders bevorzugt von 1 bis 40 g/10 min.

In einer weiteren bevorzugten Ausgestaltung der vorliegenden Erfindung weist das in dem o.g. Polymerbestandteil des Verbundmaterials oder Compounds vorliegende Polybutylensuccinat und/oder das in dem Polymerbestandteil des Verbundmaterials oder Compounds vorliegende Polybutylensuccinat-co-adipat, jeweils unabhängig voneinander, eine Schmelze-Massefließrate MFR auf
- im Bereich von ≥ 0,5 bis ≤ 3,5 g/10 min, vorzugsweise im Bereich von ≥ 1 bis ≤ 3 g/10min,
   und/oder (vorzugsweise "oder")
- im Bereich von > 3,5 g/10 min bis ≤ 12 g/10 min, vorzugsweise im Bereich von ≥ 4 g/10 min bis ≤ 10 g/10 min,
   und/oder (vorzugsweise "oder")
- im Bereich von > 12 g/10 min bis ≤ 50 g/10 min, vorzugsweise im Bereich von ≥ 15 g/10 min bis ≤ 35 g/10 min.

Eigene Untersuchungen haben ergeben, dass sich durch die Auswahl und Kombination von Polybutylensuccinat und/oder von Polybutylensuccinat-co-adipat, welche jeweils Schmelze-Massefließraten MFR in den oben angegebenen Bereichen aufweisen, die Verarbeitungseigenschaften des erfindungsgemäßen Verbundmaterials oder Compounds gezielt beeinflussen lassen:
So eignet sich beispielsweise ein im erfindungsgemäßen Einwegartikel eingesetztes Verbundmaterial oder Compound, worin das in dessen Polymerbestandteil vorliegende Polybutylensuccinat und/oder (insbesondere "und") das in dessen Polymerbestandteil vorliegende Polybutylensuccinat-co-adipat, jeweils unabhängig voneinander, eine Schmelze-Massefließrate MFR im Bereich von ≥ 0,5 bis ≤ 3,5 g/10 min, vorzugsweise im Bereich von ≥ 1 bis ≤ 3 g/10min, aufweist, ausgezeichnet für die Verarbeitung im Thermoformverfahren, Folienextrusionsverfahren, Blasfolienextrusionsverfahren und/oder im Extrusionsblasformverfahren.

Ein in einem erfindungsgemäßen Einwegartikel eingesetztes Verbundmaterial oder Compound, worin das in dessen Polymerbestandteil vorliegende Polybutylensuccinat und/oder (insbesondere "und") das in dessen Polymerbestandteil vorliegende Polybutylensuccinat-co-adipat, jeweils unabhängig voneinander, eine Schmelze-Massefließrate MFR im Bereich von > 3,5 g/10 min bis ≤ 12 g/10 min, vorzugsweise im Bereich von ≥ 4 g/10 min bis ≤ 10 g/10 min, aufweist, eignet sich in besonderer Weise für die Verarbeitung im Schaumextrusionsverfahren.

Ein in einem erfindungsgemäßen Einwegartikel eingesetztes Verbundmaterial oder Compound, worin das in dessen Polymerbestandteil vorliegende Polybutylensuccinat und/oder (insbesondere "und") das in dessen Polymerbestandteil vorliegende Polybutylensuccinat-co-adipat, jeweils unabhängig voneinander, eine Schmelze-Massefließrate MFR im Bereich von > 12 g/10 min bis ≤ 50 g/10 min, vorzugsweise im Bereich von ≥ 15 g/10 min bis ≤ 35 g/10 min, aufweist, eignet sich hervorragend für die Verarbeitung im Spritzgussverfahren. Ebenso eignet sich ausgezeichnet für eine Verarbeitung im Spritzgussverfahren ein in einem erfindungsgemäßen Einwegartikel eingesetztes Verbundmaterial oder Compound, worin das in dessen Polymerbestandteil vorliegende Polybutylensuccinat eine Schmelze-Massefließrate MFR im Bereich von > 12 g/10 min bis ≤ 50 g/10 min, vorzugsweise von ≥ 15 g/10 min bis ≤ 35 g/10 min, aufweist und worin das in dessen Polymerbestandteil vorliegende Polybutylensuccinat-co-adipat eine Schmelze-Massefließrate MFR im Bereich von ≥ 0,5 g/10 min bis ≤ 10 g/10 min, vorzugsweise von ≥ 1 g/10 min bis ≤ 5 g/10 min, aufweist. Weiter eignet sich ausgezeichnet für eine Verarbeitung im Spritzgussverfahren ein in einem erfindungsgemäßen Einwegartikel eingesetztes Verbundmaterial oder Compound, worin das in dessen Polymerbestandteil vorliegende Polybutylensuccinat eine Schmelze-Massefließrate MFR im Bereich von ≥ 0,5 g/10 min bis ≤ 10 g/10 min, vorzugsweise von ≥ 1 g/10 min bis ≤ 5 g/10 min aufweist und worin das in dessen Polymerbestandteil vorliegende Polybutylensuccinat-co-adipat eine Schmelze-Massefließrate MFR im Bereich von > 12 g/10 min bis ≤ 50 g/10 min, vorzugsweise von ≥ 15 g/10 min bis ≤ 35 g/10 min, aufweist.

Bevorzugt können im Rahmen der vorliegenden Erfindung in einem in einem erfindungsgemäßen Einwegartikel eingesetzten Verbundmaterial oder Compound (oder in einer entsprechenden Polymermischung oder einem Polymerblend) dessen Verarbeitungseigenschaften bzw. die Materialeigenschaften eines daraus hergestellen Artikels oder Einwegartikels gezielt eingestellt werden, indem man in dessen Polymerbestandteil:
(i) ein geeignetes bzw. bevorzugtes Massenverhältnis des darin vorliegenden Polybutylensuccinats zu dem darin vorliegenden Polybutylensuccinat-co-adipat auswählt und gleichzeitig
(ii) Polybutylensuccinat und/oder Polybutylensuccinat-co-adipat mit jeweils geeigneten bzw. bevorzugten Schmelze-Massefließraten MFR auswählt.

Bevorzugt ist danach in vielen Fällen auch ein vorstehend beschriebenes, in einem erfindungsgemäßen Einwegartikel eingesetztes Verbundmaterial oder Compound (oder ein in diesem Text als bevorzugt beschriebenes Verbundmaterial oder Compound), wobei
- das Massenverhältnis des in dem Polymerbestandteil des Verbundmaterials oder Compounds vorliegenden Polybutylensuccinats zu dem in dem Polymerbestandteil des Verbundmaterials oder Compounds vorliegenden Polybutylensuccinat-co-adipat im Bereich von 10 : 90 bis 40 : 60, vorzugsweise von 10 : 90 bis 35 : 65 und besonders bevorzugt von 20 : 80 bis 35 : 65, liegt
   und
- das in dem Polymerbestandteil des Verbundmaterials oder Compounds vorliegende Polybutylensuccinat und/oder (vorzugsweise "und") das in dem Polymerbestandteil des Verbundmaterials oder Compounds vorliegende Polybutylensuccinat-co-adipat, jeweils unabhängig voneinander, eine Schmelze-Massefließrate MFR im Bereich von ≥ 0,5 bis ≤ 3,5 g/10 min, vorzugsweise im Bereich von ≥ 1 bis ≤ 3 g/10min, aufweist.

Ebenfalls ist in vielen Fällen bevorzugt ein vorstehend beschriebenes, in einem erfindungsgemäßen Einwegartikel eingesetztes Verbundmaterial oder Compound (oder ein in diesem Text als bevorzugt beschriebenes Verbundmaterial oder Compound) wobei
- das Massenverhältnis des in dem Polymerbestandteil des Verbundmaterials oder Compounds vorliegenden Polybutylensuccinats zu dem in dem Polymerbestandteil des Verbundmaterials oder Compounds vorliegenden Polybutylensuccinat-co-adipat im Bereich von 90 : 10 bis 60 : 40, vorzugsweise von 90 : 10 bis 65 : 35 und besonders bevorzugt von 80 : 20 bis 65 : 35, liegt
   und
- das in dem Polymerbestandteil des Verbundmaterials oder Compounds vorliegende Polybutylensuccinat und/oder (vorzugsweise "und") das in dem Polymerbestandteil des Verbundmaterials oder Compounds vorliegende Polybutylensuccinat-co-adipat, jeweils unabhängig voneinander, eine Schmelze-Massefließrate MFR im Bereich von > 12 g/10 min bis ≤ 50 g/10 min, vorzugsweise im Bereich von ≥ 15 g/10 min bis ≤ 35 g/10 min, aufweist.

Als in einem erfindungsgemäßen Einwegartikel einsetzbare organische Füllstoffbestandteile kommen ein oder mehrere partikuläre und/oder faserförmige, Zellulose-haltige Materialien in Betracht. Als in einem erfindungsgemäßen Einwegartikel einsetzbare anorganische Füllstoffbestandteile kommen ein oder mehrere partikuläre anorganische Materialien in Betracht, ausgewählt aus der Gruppe bestehend aus Calciumcarbonat, Tonmineralien und Silikate.

Es hat sich in eigenen Untersuchungen gezeigt, dass das in einem erfindungsgemäßen Einwegartikel einsetzbare, mindestens eine partikuläre und/oder faserförmige, Zellulose-haltige Material als organischer Füllstoffbestandteil (insbesondere die unten als bevorzugt angegebenen Zellulose-haltigen Materialien) in besonderer Weise zum mechanischen Eigenschaftsprofil des erfindungsgemäßen Verbundmaterials oder Compounds, bzw. von daraus hergestellten Artikeln, beiträgt.

Durch Variation des Massenanteils an dem mindestens einen partikulären und/oder faserförmigen, Zellulose-haltigen Material als organischem Füllstoffbestandteil in dem in einem erfindungsgemäßen Einwegartikel eingesetzten Verbundmaterial oder Compound können aus dem entsprechenden Verbundmaterial oder Compound beispielsweise eher dünnwandige Artikel hergestellt werden - etwa wenn eine Gesamtmenge an mindestens einem Zellulose-haltigen Material im Bereich von 5 bis 35 Massen-%, bezogen auf die Gesamtmasse des Verbundmaterials oder Compounds, eingesetzt wird. Alternativ können in vielen Fällen auch eher dickwandige Artikel (z.B. Urnen) hergestellt werden - etwa wenn eine Gesamtmenge an mindestens einem Zellulose-haltigem Material im Bereich von 25 bis 50 Massen-%, bezogen auf die Gesamtmasse des Verbundmaterials oder Compounds, eingesetzt wird. Durch Variation des Gehaltes des Verbundmaterials oder Compounds an erfindungsgemäß einsetzbarem, mindestens einem partikulären und/oder faserförmigen, Zellulose-haltigen Material als organischem Füllstoffbestandteil können daher in vorteilhafter Weise die mechanischen Eigenschaften des Verbundmaterials oder Compounds, bzw. die mechanischen Eigenschaften eines aus dem Verbundmaterial oder Compound hergestellten erfindungsgemäßen Artikels, gesteuert oder eingestellt werden.

Weiter hat sich in eigenen Untersuchungen gezeigt, dass das erfindungsgemäß einsetzbare, mindestens eine partikuläre anorganische Material als anorganischer Füllstoffbestandteil (insbesondere die unten als bevorzugt angegebenen partikulären anorganischen Materialien) in besonderer Weise zu den Duktilitätseigenschaften und/oder zur Barrierewirkung gegenüber Sauerstoff des erfindungsgemäßen Verbundmaterials oder Compounds, bzw. von daraus hergestellten Artikeln, beiträgt. So wurde etwa in eigenen Untersuchungen festgestellt, dass ein beispielhafter erfindungsgemäßer Artikel, bestehend aus einem erfindungsgemäß eingesetzten Verbundmaterial oder Compound, eine Sauerstofftransmissionsrate von < 0,01 cm³/Artikel*Tag*bar aufwies, während ein entsprechender Artikel, welcher keine anorganischen Füllstoffe enthielt, eine Sauerstofftransmissionsrate von 0,1 cm³/Artikel*Tag*bar aufwies.

So weist ein Verbundmaterial oder Compound, bzw. ein daraus hergestellter Artikel, mit einem geringen Gehalt an mindestens einem partikulären anorganischen Material - etwa enthaltend eine Gesamtmenge an mindestens einem partikulären anorganischen Material im Bereich von 3 bis 10 Massen-%, bezogen auf die Gesamtmasse des Verbundmaterials oder Compounds, eine vergleichsweiße hohe Duktilität (plastische Verformbarkeit), eine geringe Sprödigkeit und eine verhältnismäßig geringe Barrierewirkung gegenüber Sauerstoff auf. Dagegen weist ein in einem erfindungsgemäßen Einwegartikel eingesetztes Verbundmaterial oder Compound, bzw. ein daraus hergestellter Einwegartikel, mit einem höheren Gehalt an mindestens einem partikulären anorganischen Material - etwa enthaltend eine Gesamtmenge an mindestens einem partikulären anorganischen Material im Bereich von 12,5 bis 25 Massen-%, bezogen auf die Gesamtmasse des Verbundmaterials oder Compounds, eine vergleichsweiße geringe Duktilität, eine vergleichsweise höhere Sprödigkeit und eine vergleichsweise höhere Barrierewirkung gegenüber Sauerstoff auf. Durch Variation des Gehaltes des erfindungsgemäßen Verbundmaterials oder Compounds an erfindungsgemäß einsetzbarem, mindestens einem partikulären anorganischen Material als anorganischem Füllstoffbestandteil können daher in vorteilhafter Weise die Duktilitäts-Eigenschaften und/oder die Barriereeigenschaften gegenüber Sauerstoff des Verbundmaterials oder Compounds, bzw. die die Duktilitäts-Eigenschaften und/oder die Barriereeigenschaften gegenüber Sauerstoff eines aus dem erfindungsgemäßen Verbundmaterial oder Compound hergestellten erfindungsgemäßen Einwegartikels, gesteuert oder eingestellt werden.

Sollen aus dem Verbundmaterial oder Compound beispielsweise Einwegartikel wie Kaffeekapseln hergestellt werden, hat es sich oft als vorteilhaft erwiesen, einen höheren Gehalt (dazu siehe vorstehend) an mindestens einem partikulären anorganischen Material (z.B. Kaolin) in dem entsprechenden Verbundmaterial oder Compound einzusetzen, weil auf diese Weise solche Kaffeekapseln für die bestimmungsgemäße Verwendung besser geeignet sind und beispielsweise besser angestochen werden können.

Ein in einem erfindungsgemäßen Einwegartikel eingesetztes Verbundmaterial oder Compound (oder ein in diesem Text als bevorzugt beschriebenes, entsprechend eingesetztes Verbundmaterial oder Compound) umfasst als Füllstoffbestandteile
- mindestens ein partikuläres und/oder faserförmiges, Zellulose-haltiges Material (vorzugsweise als organischen Füllstoffbestandteil)
   und
- mindestens ein partikuläres anorganisches Material (vorzugsweise als anorganischen Füllstoffbestandteil), ausgewählt aus der Gruppe bestehend aus Calciumcarbonat, Tonmineralien und Silikate.

Ein erfindungsgemäßer Einwegartikel umfasst ein Verbundmaterial oder ein Compound (oder ein vorstehend oder nachfolgend als bevorzugt beschriebenes Verbundmaterial oder ein Compound) umfassend
C1) als Polymerbestandteil
   - Polybutylensuccinat und Polybutylensuccinat-co-adipat,
      und/oder
   - eine vorstehend beschriebene Polymermischung oder einen Polymerblend (oder eine in diesem Text als bevorzugt beschriebene Polymermischung oder einen Polymerblend),

   wie in den beigefügten Ansprüchen definiert,
   in einer Gesamtmenge im Bereich von 30 bis 75 Massen-%, bevorzugt von 35 bis 70 Massen-%, bezogen auf die Gesamtmasse des Verbundmaterials oder Compounds,
   und
C2) als ersten Füllstoffbestandteil (vorzugsweise als organischen Füllstoffbestandteil) mindestens ein partikuläres und/oder faserförmiges, Zellulose-haltiges Material,
   in einer Gesamtmenge im Bereich von 3 bis 50 Massen-%, bevorzugt von 3,5 bis 47,5 Massen-%, besonders bevorzugt von 5 bis 45 Massen-%, bezogen auf die Gesamtmasse des Verbundmaterials oder Compounds.

Bevorzugt ist auch ein vorstehend beschriebener erfindungsgemäßer Einwegartikel, umfassend ein Verbundmaterial oder ein Compound (oder ein vorstehend oder nachfolgend als bevorzugt beschriebenes Verbundmaterial oder ein Compound) wobei das partikuläre und/oder faserförmige, Zellulose-haltige Material
- eine oder mehrere Naturfasern und/oder ein oder mehrere Zellulose-Regenerat-Fasern umfasst
   und/oder
- ausgewählt ist aus der Gruppe bestehend aus Zellulose, Holz, Flachs, Hanf, Sonnenblumenkernschalen, Bambus, Jute, Kenaf, Ramie, Kokosfasern, Fasern von Stängeln der Ginsterpflanze, Fasern von Stängeln der Hopfenpflanze, Fasern von Blättern und Fruchtständen von Rohrkolbenschilf und deren Mischungen,
   wobei vorzugsweise das partikuläre, Zellulose-haltige Material ausgewählt ist aus der Gruppe bestehend aus Holz, Flachs, Hanf, Sonnenblumenkernschalen (vorzugsweise Mehl von Sonnenblumenkernschalen) und deren Mischungen.

Besonders bevorzugt ist ein vorstehend beschriebenes, in einem erfindungsgemäßen Einwegartikel eingesetztes Verbundmaterial oder Compound (oder ein vorstehend oder nachfolgend als bevorzugt beschriebenes Verbundmaterial oder Compound) wobei das partikuläre, Zellulose-haltige Material Mehl von Sonnenblumenkernschalen umfasst. Sonnenblumenkernschalen fallen in großen Mengen als industrielles Abfallprodukt, beispielsweise bei der Lebensmittelherstellung, an. Der Einsatz als organischer Füllstoffbestandteil in dem im erfindungsgemäßen Einwegartikel eingesetzten Verbundmaterial oder Compound kombiniert daher die Vorteile, dass (i) ein ansonsten ungenutztes Abfallprodukt einer industriellen Verwendung zugeführt wird und dass ein derartiger Füllstoffbestandteil nicht nur (ii) biologisch abbaubar ist, sondern dass bei dessen Zersetzung zusätzlich auch noch (iii) wertvolle, biologisch verwertbare Abbauprodukte entstehen.

Im Rahmen der vorliegenden Erfindung und wie auf dem Fachgebiet üblich, werden unter Zellulose-Regenerat-Fasern solche Fasern verstanden, die aus natürlich vorkommenden, nachwachsenden, Zellulose-haltigen Rohstoffen über chemische Prozesse hergestellt werden. Dabei handelt es sich vor allem um Zellulosederivate aus Holz. Zellulose-Regenerat-Fasern umfassen im Rahmen der vorliegenden Erfindung vorzugsweise die Materialien (bzw. Fasern aus den Materialien) Viskose, Modal, Lyocell und Cupro, besonders bevorzugt Lyocell.

Als Viskosefasern werden Chemiefasern (Regeneratfasern) bezeichnet, die mittels des an sich bekannten Viskoseverfahrens, einem weit verbreiteten Nassspinnverfahren, industriell hergestellt werden. Der Ausgangsrohstoff des Viskoseverfahrens ist Cellulose, überwiegend in Form von Holz, bei dem durch verschiedene Verfahren die hochreine Cellulose extrahiert wird.

Modalfasern bestehen, wie Viskosefasern, ebenfalls zu 100 Prozent aus Cellulose, werden aber, anders als andere Regeneratfasern, hauptsächlich aus Buchenholz hergestellt. Der Ausgangsstoff ist entrindetes und anschließend zur Trennung vom Lignin in Stücke zerkleinertes Buchenholz. Durch Modifizierung des Herstellungsprozesses erreicht man bei Modalfasern eine höhere Faserfestigkeit und verbesserte Fasereigenschaften als bei anderen Zellstofffasern. Außerdem besitzt die Modalfaser eine höhere Feuchtigkeitsaufnahme und trocknet schnell.

Lyocell ist eine an sich bekannte, aus Cellulose bestehende, industriell hergestellte Cellulose-Regeneratfaser, die nach dem an sich bekannten Direkt-Lösemittelverfahren hergestellt wird. Sie wird insbesondere für die Herstellung von Textilien und Vliesstoffen ("Nonwovens") eingesetzt. Lyocell-Fasern weisen eine hohe Trocken- und Nassfestigkeit auf, sind weich und absorbieren Feuchtigkeit sehr gut.

Cupro, auch als Kupferseide oder Kupferfaser bezeichnet, ist eine aus Celluloseregeneraten aufgebaute textile Faser. Die Eigenschaften von Cupro sind mit Viskose vergleichbar. Cuprofasern werden vor allem zu Textil-Futterstoffen verarbeitet, denn sie sind atmungsaktiv, hygroskopisch und laden sich nicht statisch auf. Zudem haben daraus hergestellte Stoffe einen seidigen weichen Griff und sind glatt und glänzend. Cupro wird üblicherweise nach dem Kupferoxid-Ammoniak-Verfahren (Cuoxam-Verfahren) hergestellt.

Ein in einem vorstehend beschriebenen erfindungsgemäßen Einwegartikel eingesetztes Verbundmaterial oder Compound (oder ein in diesem Text als bevorzugt beschriebenes entsprechendes Verbundmaterial oder Compound) umfasst zusätzlich
C3) als zweiten Füllstoffbestandteil mindestens ein partikelförmiges anorganisches Material, ausgewählt aus der Gruppe bestehend aus Calciumcarbonat, Tonmineralien und Silikate,
   in einer Gesamtmenge im Bereich von 12,5 bis 25 Massen-%, bezogen auf die Gesamtmasse des Verbundmaterials (wie in den beigefügten Ansprüchen definiert).
   und vorzugsweise
C4) weitere Zusatz- und/oder Hilfsstoffe, vorzugsweise ausgewählt aus der Gruppe bestehend aus Haftvermittler (vorzugsweise Maleinsäureanhydrid), Wachse, Gleitmittel, Antioxidantien und Lichtschutzmittel,
   vorzugsweise in einer Gesamtmenge im Bereich von 0,1 bis 10 Massen-%, bevorzugt von 0,2 bis 5 Massen-%, bezogen auf die Gesamtmasse des Verbundmaterials.

Weiter wurde gefunden, dass partikelförmiges anorganisches Material, vorzugsweise mit einem hohen mittleren Aspektverhältnis seiner Partikel, als zweiter Füllstoffbestandteil dem erfindungsgemäßen Verbundmaterial oder Compound bzw. den daraus hergestellten Artikeln wie Einwegartikeln besonders gute Festigkeitseigenschaften verleiht.

Bevorzugt ist daher auch ein vorstehend beschriebenes erfindungsgemäßer Einwegartikel umfassend ein vorstehend beschriebenes Verbundmaterial oder Compound oder ein in diesem Text als bevorzugt beschriebenes Verbundmaterial oder Compound, wobei das mindestens eine partikuläre anorganische Material und/oder der zweite Füllstoffbestandteil C3) mindestens ein partikelförmiges anorganisches Material umfassen bzw. umfasst,
- welches ausgewählt ist aus der Gruppe bestehend aus Calciumcarbonat, Talkum, Talk, Kaolin, Eisenglimmer, Wollastonit-Glimmer, Muskovit-Glimmer, Phlogopit-Glimmer und deren Mischungen,
   und vorzugsweise ausgewählt ist aus der Gruppe bestehend aus Talk, Kaolin, Eisenglimmer, Wollastonit-Glimmer, Muskovit-Glimmer, Phlogopit-Glimmer und deren Mischungen
   und/oder
- dessen Partikel ein mittleres Aspektverhältnis von ≥ 5 : 1, vorzugsweise von ≥ 7 : 1 und besonders bevorzugt von ≥ 10 : 1 aufweisen.

Unter dem "Aspektverhältnis" wird im Rahmen der vorliegenden Erfindung (wie auf dem Fachgebiet üblich) vorzugsweise das Verhältnis zwischen der Länge (Höhe) und der (kleinsten) lateralen Ausdehnung eines betrachteten Partikels (Teilchen) verstanden.

Unter dem "mittleren Aspektverhältnis" wird im Rahmen der vorliegenden Erfindung (wie auf dem Fachgebiet üblich) vorzugsweise der Mittelwert der Aspektverhältnisse einer in einer Probe vorliegenden Mehrzahl von Partikeln verstanden. Das mittlere Aspektverhältnis wird für die Zwecke der vorliegenden Erfindung vorzugsweise durch dynamische Bildanalyse einer Mehrzahl von Partikeln bestimmt, vorzugsweise mit einem automatisierten Partikelmessgerät wie z.B. dem Partikelmessgerät Analysette 28 ImageSizer der Firma Fritsch GmbH, Deutschland.

Die vorliegende Erfindung betrifft somit insbesondere einen vorstehend beschriebenen erfindungsgemäßen Einwegartikel, umfassend oder bestehend aus einem Verbundmaterial oder Compound (oder einem vorstehend oder nachfolgend als bevorzugt beschriebenen Verbundmaterial oder Compound) umfassend
C1) als Polymerbestandteil
   - Polybutylensuccinat und Polybutylensuccinat-co-adipat,
      und/oder
   - eine vorstehend beschriebene Polymermischung oder einen Polymerblend (oder eine in diesem Text als bevorzugt beschriebene Polymermischung oder Polymerblend),

   in einer Gesamtmenge im Bereich von 30 bis 75 Massen-%, besonders bevorzugt von 35 bis 70 Massen-%, bezogen auf die Gesamtmasse des Verbundmaterials oder Compounds,
   wobei vorzugsweise das Massenverhältnis des in der Polymermischung oder dem Polymerblend vorliegenden Polybutylensuccinats zu dem in der Polymermischung oder dem Polymerblend vorliegenden Polybutylensuccinat-co-adipat im Bereich von 10 : 90 bis 90 : 10, vorzugsweise von 20 : 80 bis 80 : 20, mehr bevorzugt von 30 : 70 bis 70 : 30, besonders bevorzugt von 40 : 60 bis 60 : 40 und ganz besonders bevorzugt von 45 : 55 bis 55 : 45 liegt;
C2) als ersten Füllstoffbestandteil (vorzugsweise als organischen Füllstoffbestandteil) mindestens ein partikuläres und/oder faserförmiges, Zellulose-haltiges Material, vorzugsweise ausgewählt aus der Gruppe bestehend aus Zellulose, Holz, Flachs, Hanf, Sonnenblumenkernschalen, Bambus, Jute, Kenaf, Ramie, Kokosfasern, Fasern von Stängeln der Ginsterpflanze, Fasern von Stängeln der Hopfenpflanze, Fasern von Blättern und Fruchtständen von Rohrkolbenschilf und deren Mischungen, vorzugsweise in einer Gesamtmenge im Bereich von 3 bis 50 Massen-%, bevorzugt von 3,5 bis 47,5 Massen-%, besonders bevorzugt von 5 bis 45 Massen-%, bezogen auf die Gesamtmasse des Verbundmaterials oder Compounds,
C3) als zweiten Füllstoffbestandteil mindestens ein partikelförmiges anorganisches Material ausgewählt aus der Gruppe bestehend aus Calciumcarbonat, Tonmineralien und Silikate,
   in einer Gesamtmenge im Bereich von 12,5 bis 25 Massen-%, bezogen auf die Gesamtmasse des Verbundmaterials,
   und vorzugsweise
C4) weitere Zusatz- und/oder Hilfsstoffe, vorzugsweise ausgewählt aus der Gruppe bestehend aus Haftvermittler, (vorzugsweise Maleinsäureanhydrid), Wachse, Gleitmittel, Antioxidantien und Lichtschutzmittel,
   vorzugsweise in einer Gesamtmenge im Bereich von 0,1 bis 10 Massen-%, bevorzugt von 0,2 bis 5 Massen-%, bezogen auf die Gesamtmasse des Verbundmaterials.

Der Einwegartikel der vorliegenden Erfindung ist vorzugsweise kompostierbar.

Hinsichtlich bevorzugter Ausgestaltungen eines hier vorgenannten erfindungsgemäßen Einwegartikels gelten die für die oben beschriebene Polymermischung oder den Polymerblend und/oder für das oben beschriebene Verbundmaterial oder Compound vorstehend angegebenen Erläuterungen, insbesondere betreffend (jeweils) mögliche bevorzugte Ausführungsformen und (jeweils) mögliche bzw. bevorzugte Kombinationen, entsprechend (gegebenenfalls sinngemäß), und umgekehrt.

Der vorstehend angegebene Einwegartikel ist - bedingt durch seinen Gehalt an PBS und PBSA - in aller Regel ausgezeichnet biologisch abbaubar und vorzugsweise kompostierbar nach den Kriterien der DIN EN 13432 : 2000-12.

Einwegartikel im Sinne der vorliegenden Erfindung umfassen vorzugsweise Kaffeekapseln.

Die vorliegende Erfindung betrifft weiterhin auch die Verwendung eines oben beschriebenen Verbundmaterials oder Compounds (oder eines in diesem Text als bevorzugt beschriebenen entsprechenden Verbundmaterials oder Compounds) zur oder bei der Herstellung eines, vorzugsweise kompostierbaren, Einwegartikels.

Hinsichtlich bevorzugter Ausgestaltungen einer hier vorgenannten erfindungsgemäßen Verwendung zur oder bei der Herstellung eines Einwegartikels gelten die vorstehend für den erfindungsgemäßen Einwegartikel, für die oben beschriebene Polymermischung oder den Polymerblend und/oder für das oben beschriebene Verbundmaterial oder Compound vorstehend angegebenen Erläuterungen, insbesondere betreffend (jeweils) mögliche bevorzugte Ausführungsformen und (jeweils) mögliche bzw. bevorzugte Kombinationen, entsprechend (gegebenenfalls sinngemäß), und umgekehrt.

Ebenfalls betrifft die vorliegende Erfindung ein Verfahren zur Herstellung eines vorstehend beschriebenen Verbundmaterials oder Compounds, umfassend die Schritte
V1) Herstellen oder Bereitstellen
   - einer vorstehend bezeichneten Polymermischung oder eines Polymerblends (oder einer in diesem Text als bevorzugt bezeichneten Polymermischung oder eines Polymerlends),
      und/oder (vorzugsweise "oder")
   - von Polybutylensuccinat und/oder (vorzugsweise "und") von Polybutylensuccinat-co-adipat,
V2) Herstellen oder Bereitstellen mindestens eines partikulären und/oder faserförmigen, Zellulose-haltigen Materials als ersten Füllstoffbestandteil, wie vorstehend angegeben oder als bevorzugt angegeben,
V3) Herstellen oder Bereitstellen mindestens eines partikelförmigen anorganischen Materials als zweiten Füllstoffbestandteil, wie vorstehend angegeben oder als bevorzugt angegeben,
V4) Vereinigen
   - der Polymermischung oder des Polymerblends aus Schritt V1)
      und/oder (vorzugsweise "oder")
   - des Polybutylensuccinats und/oder (vorzugsweise "und") des Polybutylensuccinat-co-adipats aus Schritt V1),

   mit dem mindestens einen partikulären und/oder faserförmigen, Zellulose-haltigen Material aus Schritt V2)
   und zusätzlich mit dem mindestens einen partikelförmigen anorganischen Material aus Schritt V3),
   vorzugsweise umfassend einen Schritt des Compoundierens, besonders bevorzugt umfassend einen Schritt der Schmelzextrusion,
   so dass das oder ein Verbundmaterial oder der oder ein Compound resultiert.

Hinsichtlich bevorzugter Ausgestaltungen des hier vorstehend angeführten erfindungsgemäßen Verfahrens zur Herstellung eines Verbundmaterials oder Compounds gelten die vorstehend für die oben beschriebene Verwendung einer Polymermischung oder eines Polymerblends zur oder bei der Herstellung eines Verbundmaterials oder Compounds, die erfindungsgemäße Verwendung zur oder bei der Herstellung eines Einwegartikels, für den erfindungsgemäßen Einwegartikel, für die oben beschriebene Polymermischung oder den Polymerblend und/oder für das oben beschriebene Verbundmaterial oder Compound vorstehend angegebenen Erläuterungen, insbesondere betreffend (jeweils) mögliche bevorzugte Ausführungsformen und (jeweils) mögliche bzw. bevorzugte Kombinationen, entsprechend (gegebenenfalls sinngemäß), und umgekehrt.

In Schritt V1) des vorstehend angegebenen erfindungsgemäßen Verfahrens zur Herstellung eines Verbundmaterials oder Compounds kann eine oben beschriebene Polymermischung oder Polymerblend (oder eine in diesem Text als bevorzugt bezeichnete Polymermischung oder Polymerblend) hergestellt oder bereitgestellt werden, d.h. es kann zur Herstellung des Verbundmaterials oder Compounds von besagter Polymermischung oder Polymerblend ausgegangen werden. Ebenso können in Schritt V1) (oder auch in separaten Teilschritten des Schrittes V1) des vorstehend angegebenen erfindungsgemäßen Verfahrens Polybutylensuccinat und Polybutylensuccinat-co-adipat separat als einzelne Stoffe bzw. Polymerbestandteile hergestellt oder bereitgestellt werden, so dass eine Mischung der beiden Polymere (bzw. des Polymers und des Copolymers) miteinander (sowie mit den angegebenen weiteren Bestandteilen) erst in Schritt V4) erfolgt. Es kann aber in Schritt V1) des vorstehend angegebenen erfindungsgemäßen Verfahrens auch eine oben beschriebene Polymermischung oder Polymerblend hergestellt oder bereitgestellt werden und zusätzlich wahlweise (i) entweder Polybutylensuccinat separat als einzelner Stoff bzw. Polymerbestandteil hergestellt oder bereitgestellt werden, oder (ii) Polybutylensuccinat-co-adipat separat als einzelner Stoff bzw. Polymerbestandteil hergestellt oder bereitgestellt werden, oder (iii) Polybutylensuccinat und Polybutylensuccinat-co-adipat beide separat als einzelne Stoffe bzw. Polymerbestandteile hergestellt oder bereitgestellt werden. Auf diese Weise werden die in Schritt V1) hergestellten bzw. bereitgestellten Polymerbestandteile mindestens teilweise erst in Schritt V4) miteinander (sowie mit den angegebenen weiteren Bestandteilen) vermischt.

In Schritt V4) des vorstehend angegebenen erfindungsgemäßen Verfahrens zur Herstellung eines Verbundmaterials oder Compounds werden vorzugsweise die vorstehend angegebenen Bestandteile (Polymermischung oder Polymerblend aus Schritt V1) und/oder Polybutylensuccinat und/oder Polybutylensuccinat-co-adipat aus Schritt V1), mindestens ein partikuläres und/oder faserförmiges, Zellulose-haltiges Material aus Schritt V2) und mindestens ein partikelförmiges anorganisches Material aus Schritt V3)) zusätzlich mit weiteren Zusatz- und/oder Hilfsstoffe, vorzugsweise ausgewählt aus der Gruppe bestehend aus Haftvermittler (vorzugsweise Maleinsäureanhydrid), Wachse, Gleitmittel, Antioxidantien und Lichtschutzmittel, vereinigt.

Die vorliegende Erfindung betrifft weiterhin auch ein Verfahren zur Herstellung eines Einwegartikels, umfassend die Schritte
V5) Herstellen oder Bereitstellen eines Verbundmaterials oder Compounds umfassend als Polymerbestandteil
   - Polybutylensuccinat und Polybutylensuccinat-co-adipat
      und/oder
   - eine vorstehend bezeichnete erfindungsgemäße Polymermischung oder Polymerblend (oder eine in diesem Text als bevorzugt bezeichnete Polymermischung oder Polymerlend)
      und
      einen oder mehrere organische und/oder anorganische Füllstoffbestandteile,
      wobei das Herstellen oder Bereitstellen eines Verbundmaterials oder Compounds ausgeführt wird durch
   - Bereitstellen eines vorstehend beschriebenen Verbundmaterials oder Compounds (oder eines in diesem Text als bevorzugt beschriebenes Verbundmaterial oder Compound)
      und/oder (vorzugsweise "oder")
   - Herstellen eines Verbundmaterials oder Compounds nach einem vorstehend beschriebenen erfindungsgemäßen Verfahren (oder nach einem in diesem Text als bevorzugt beschriebenen erfindungsgemäßen Verfahren);
   und
V6) Formen des Verbundmaterials oder Compounds, vorzugsweise umfassend mindestens einen Schritt ausgewählt aus der Gruppe bestehend aus
   - Extrusion, vorzugsweise umfassend Folienextrusion, Blasfolienextrusion, Extrusionsblasformen und Schaumextrusion;
   - Spritzgießen,
   - Tiefziehen
      und/oder
   - Thermoformen.

Hinsichtlich bevorzugter Ausgestaltungen des hier vorstehend angeführten erfindungsgemäßen Verfahrens zur Herstellung eines Einwegartikels gelten die vorstehend für das Verbundmaterial oder Compound, hergestellt oder herstellbar nach einem vorstehend angegebenen erfindungsgemäßen Verfahren, das erfindungsgemäße Verfahren zur Herstellung eines Verbundmaterials oder Compounds, die oben beschriebene Verwendung einer vorstehend beschriebenen Polymermischung oder eines Polymerblends zur oder bei der Herstellung eines Verbundmaterials oder Compounds, die erfindungsgemäße Verwendung zur oder bei der Herstellung eines Einwegartikels, für den erfindungsgemäßen Einwegartikel, fürdie oben beschriebene Polymermischung oder den Polymerblend und/oderfürdas oben beschriebene Verbundmaterial oder Compound vorstehend angegebenen Erläuterungen, insbesondere betreffend (jeweils) mögliche bevorzugte Ausführungsformen und (jeweils) mögliche bzw. bevorzugte Kombinationen, entsprechend (gegebenenfalls sinngemäß), und umgekehrt.

Die vorliegende Erfindung wird nachfolgend unter Bezugnahme auf die Figur und durch Beispiele näher erläutert. Die nachfolgenden Beispiele sollen die Erfindung näher beschreiben und erklären, ohne ihren Schutzbereich einzuschränken.

### Figur:

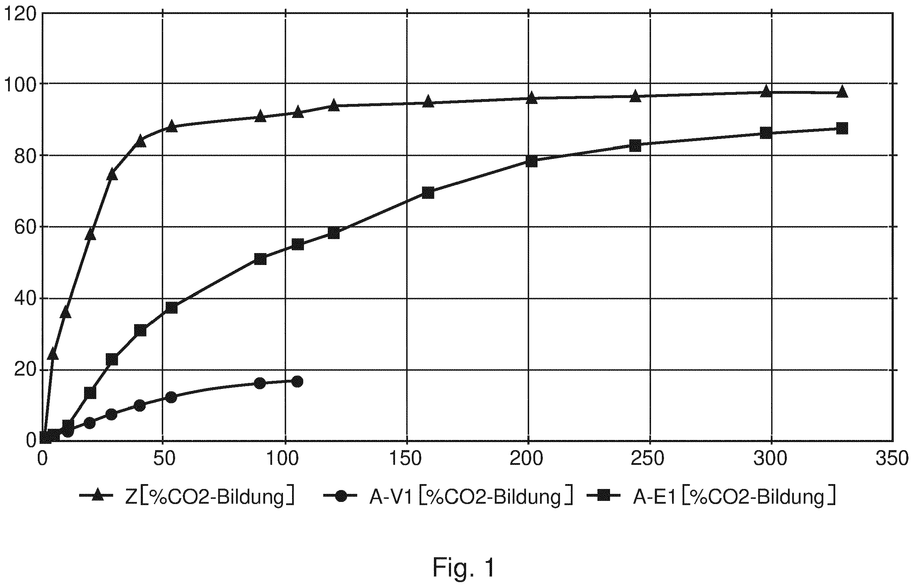

- Fig. 1:: In Fig. 1 sind die Versuchsergebnisse des Vergleichs der Kompostierungsgeschwindigkeiten von erfindungsgemäßen und nicht-erfindungsgemäßen Artikeln sowie von Zellulose (vgl. Beispiel 9, Tabelle 1) graphisch wiedergegeben.

### Beispiele:

### Beispiel 1: Herstellen einer in einem erfindungsgemäßen Einwegartikel einsetzbaren Polymermischung oder eines Polymerblends

5,41 kg Polybutylensuccinat des Typs BioPS^{™} FZ 71 PM (Fa. PTT MCC Biochem Co. Ltd, MFR = 22 g/10 min) werden mit 5,41 kg Polybutylensuccinat-co-adipat des Typs BioPS^{™} FD 92 PM (Fa. PTT MCC Biochem Co. Ltd, MFR = 4 g/10 min) vermischt und bei einer Temperatur im Bereich von 140 °C in der Einzugs- und Aufschmelzzone und 180 °C stromabwärts (wobei die Massetemperatur an der Lochplatte höher liegen kann) in einem Doppelschneckenextruder zusammen compoundiert, so dass eine erfindungsgemäße Polymermischung bzw. ein erfindungsgemäßer Polymerblend entsteht.

### Beispiel 2: Herstellen eines in einem erfindungsgemäßen Einwegartikel einsetzbaren Verbundmaterials oder Compounds

Eine wie vorstehend hergestellte (siehe Beispiel 1) Polymermischung oder Polymerblend wird mit 6 kg Mehl von Sonnenblumenkernschalen, 3 kg pulverförmigem Kaolin und 180 g Haftvermittler auf Basis von Maleinsäureanhydrid vermischt und die miteinander vermischten Bestandteile werden bei einer Temperatur im Bereich von 140 °C in der Einzugs- und Aufschmelzzone und 180 °C stromabwärts (wobei die Massetemperatur an der Lochplatte höher liegen kann) in einem Doppelschneckenextruder compoundiert bzw. vermischt, so dass ein in einem erfindungsgemäßen Einwegartikel einsetzbares Verbundmaterial oder ein erfindungsgemäßes Compound (nachfolgend bezeichnet als "VM-E1") entsteht.

### Beispiel 3: Herstellen eines in einem erfindungsgemäßen Einwegartikel einsetzbaren Verbundmaterials oder Compounds durch separate Zugabe von Polybutylensuccinat und Polybutylensuccinat-co-adipat (1)

5,41 kg Polybutylensuccinat des Typs BioPS^{™} FZ 71 PM (Näheres siehe Beispiel 1) werden mit 5,41 kg Polybutylensuccinat-co-adipat des Typs BioPS^{™} FD 92 PM (Näheres siehe Beispiel 1), 6 kg Mehl von Sonnenblumenkernschalen, 3 kg pulverförmigem Kaolin und 180 g Haftvermittler auf Basis von Maleinsäureanhydrid vermischt und die miteinander vermischten Bestandteile werden bei einer Temperatur im Bereich von 140 °C in der Einzugs- und Aufschmelzzone und 180 °C stromabwärts (wobei die Massetemperatur an der Lochplatte höher liegen kann) in einem Doppelschneckenextruder compoundiert bzw. vermischt, so dass ein erfindungsgemäßes Verbundmaterial oder ein erfindungsgemäßes Compound (nachfolgend bezeichnet als "VM-E2") entsteht.

### Beispiel 4: Herstellen eines in einem erfindungsgemäßen Einwegartikel einsetzbaren Verbundmaterials oder Compounds durch separate Zugabe von Polybutylensuccinat und Polybutylensuccinat-co-adipat (2)

3,25 kg Polybutylensuccinat des Typs BioPS^{™} FZ 71 PM (Näheres siehe Beispiel 1) werden mit 7,57 kg Polybutylensuccinat-co-adipat des Typs BioPS^{™} FD 72 PM (Fa. PTT MCC Biochem Co. Ltd, MFR = 22 g/10 min), 6 kg Mehl von Sonnenblumenkernschalen, 3 kg pulverförmigem Kaolin und 180 g Haftvermittler auf Basis von Maleinsäureanhydrid vermischt und die miteinander vermischten Bestandteile werden bei einer Temperatur im Bereich von 140 °C in der Einzugs- und Aufschmelzzone und 180 °C stromabwärts (wobei die Massetemperatur an der Lochplatte höher liegen kann) in einem Doppelschneckenextruder compoundiert so dass ein erfindungsgemäßes Verbundmaterial oder ein erfindungsgemäßes Compound (nachfolgend bezeichnet als "VM-E3") entsteht.

### Beispiel 5: Herstellen eines nicht-erfindungsgemäßen Vergleichs-Verbundmaterials oder Vergleichs-Compounds

10,82 kg Polybutylensuccinat des Typs BioPS^{™} FZ 71 PM (Näheres siehe Beispiel 1) werden mit 6 kg Mehl von Sonnenblumenkernschalen, 3 kg pulverförmigem Kaolin und 180 g Haftvermittler auf Basis von Maleinsäureanhydrid vermischt und die miteinander vermischten Bestandteile werden bei einer Temperatur im Bereich von 140 °C in der Einzugs- und Aufschmelzzone und 180 °C stromabwärts (wobei die Massetemperatur an der Lochplatte höher liegen kann) in einem Doppelschneckenextruder compoundiert, so dass ein nicht-erfindungsgemäßes Vergleichs-Verbundmaterial oder Vergleichs-Compound (nachfolgend bezeichnet als "VM-V1") entsteht.

### Beispiel 6: Herstellen eines erfindungsgemäßen Einwegartikels (1)

2 kg eines gemäß vorstehendem Beispiel 3 hergestellten Verbundmaterials oder Compounds (VM-E2) werden durch Spritzgießen bei einer Temperatur von 185 bis 195 °C zu Einweg-Pflanztöpfen (Durchmesser: 12 cm, Höhe: 12 cm, Masse: 42 g, jeweils pro einzelnem Artikel bzw. Pflanztopf) geformt. Man erhält Einweg-Pflanztöpfe als erfindungsgemäße Einwegartikel (nachfolgend bezeichnet als "A-E1").

### Beispiel 7: Herstellen eines erfindungsgemäßen Einwegartikels (2)

2 kg eines gemäß vorstehendem Beispiel 4 hergestellten Verbundmaterials oder Compounds (VM-E3) werden durch Spritzgießen bei einer Temperatur von 185 bis 195 °C zu Einweg-Pflanztöpfen (Durchmesser: 12 cm, Höhe: 12 cm, Masse: 42 g, jeweils pro einzelnem Artikel bzw. Pflanztopf) geformt. Man erhält Einweg-Pflanztöpfe als erfindungsgemäße Einwegartikel.

### Beispiel 8: Herstellen eines nicht-erfindungsgemäßen Vergleichs-Artikels

2 kg eines gemäß vorstehendem Beispiel 5 hergestellten, nicht-erfindungsgemäßen Verbundmaterials oder Compounds werden durch Spritzgießen bei einer Temperatur von 185 bis 195 °C zu Einweg-Pflanztöpfen (Durchmesser: 12 cm, Höhe: 12 cm, Masse: 42 g, jeweils pro einzelnem Artikel bzw. Pflanztopf) geformt. Man erhält Einweg-Pflanztöpfe als nicht-erfindungsgemäße Vergleichs-Artikel bzw. Vergleichs-Einwegartikel (nachfolgend bezeichnet als "A-V1").

### Beispiel 9: Vergleich der Kompostierungsgeschwindigkeiten von erfindungsgemäßen und nicht-erfindungsgemäßen Artikeln sowie von Zellulose

Ein gemäß vorstehendem Beispiel 6 hergestellter, erfindungsgemäßer Einweg-Pflanztopf (A-E1, Ausgangsmasse: 42 g), ein gemäß vorstehendem Beispiel 8 hergestellter, nichterfindungsgemäßer Vergleichs-Einweg-Pflanztopf (A-V1, Ausgangsmasse: 42 g) sowie Zellulose ("Z", Vergleich, Pulver wie verwendet für Dünnschichtchromatographie) wurden fein gemahlen und bei 28 °C zu einem simulierten Gartenkompost gegeben. Die Kompostierungsgeschwindigkeiten wurden entsprechend der DIN EN ISO 14855-1:2013-04 ermittelt, mittels Analyse des bei der Kompostierung freigesetzten Kohlenstoffdioxids (CO₂).

Hierzu wurde über einen Beobachtungszeitraum jeweils die bei der Kompostierung freigesetzte Menge an Kohlenstoffdioxid bestimmt, in Relation zu der freigesetzten Menge des Kohlenstoffdioxids bei der Zersetzung der Zellulose gesetzt und damit die relative Abbaugeschwindigkeit der Proben (A-E1 bzw. A-V1) gegenüber der Abbaugeschwindigkeit der Zellulose (Referenz) ermittelt.

Die wie oben angegeben ermittelten Werte für den Kompostierfortschritt der Artikel A-E1 und A-V1 sowie der Zellulose wurden jeweils als "% der theoretisch möglichen Gesamtkohlenstoffdioxidmenge" angegeben und gegen die Anzahl der bei der jeweiligen Messung vergangenen Tage seit Versuchsbeginn als Kompostierungsgeschwindigkeiten in der untenstehenden Tabelle 1 angegeben. Eine graphische Darstellung der Ergebnisse ist in Figur 1 angegeben.

Die Probenahmen für den nicht-erfindungsgemäßen Vergleichsartikel A-V1 wurden nach 110 Tagen abgebrochen, da eine deutliche Stagnation der durch biologischen Abbau bedingten Kohlenstoffdioxidbildung zu beobachten war.

Nach 117 Tagen ab Versuchsbeginn wurde zu den Versuchsansätzen des Artikels A-E1 und der Zellulose-Referenz frischer simulierter Gartenkompost hinzugegeben, um die nachlassende mikrobielle Aktivität auszugleichen.

**Tabelle 1: Bestimmung von Kompostierungsgeschwindigkeiten**

| **Tage seit Versuchsbeginn** | **Z [% CO₂-Bildung]** | **A-V1 [% CO₂-Bildung]** | **A-E1 [% CO₂-Bildung]** |
|---|---|---|---|
| 0 | ./. | ./. | ./. |
| 5 | 23,8 | 1,5 | 1,9 |
| 10 | 35,3 | 2,6 | 4,4 |
| 20 | 57,9 | 5,5 | 13,8 |
| 30 | 75,8 | 8,1 | 22,9 |
| 40 | 84,0 | 10,5 | 30,5 |
| 53 | 88,1 | 12,7 | 36,9 |
| 90 | 91 | 16,4 | 50,9 |
| 105 | 92,1 | 16,7 | 54,5 |
| 120 | 93,7 | Keine Daten ermittelt | 58,1 |
| 159 | 94,9 | Keine Daten ermittelt | 69,8 |
| 202 | 96,0 | Keine Daten ermittelt | 78,4 |
| 245 | 96,9 | Keine Daten ermittelt | 83,0 |
| 299 | 97,7 | Keine Daten ermittelt | 86,1 |
| 330 | 97,8 | Keine Daten ermittelt | 87,7 |

Aus den Daten in vorstehender Tabelle 1 ist ersichtlich, dass die CO₂-Bildung durch biologischen Abbau für den nicht-erfindungsgemäßen Vergleichsartikel A-V1 deutlich langsamer vonstattengeht als bei dem erfindungsgemäßen Artikel A-E1 oder bei Zellulose. Bereits nach 80 Tagen ab Versuchsbeginn wird für den nicht-erfindungsgemäßen Vergleichsartikel A-V1 ein deutlich verlangsamter biologischer Abbau beobachtet. Zum Zeitpunkt des Versuchsabbruchs nach 110 Tagen (dazu siehe auch oben) waren lediglich ca. 16 Massen% der organischen Bestandteile (umfassend das Polybutylensuccinat und die Sonnenblumenkernschalen) des nicht-erfindungsgemäßen Vergleichsartikels A-V1 tatsächlich biologisch abgebaut worden.

Aus den Daten in vorstehender Tabelle 1 ist auch ersichtlich, dass der Massenverlust durch biologischen Abbau für den erfindungsgemäßen Artikel A-E1 zwar langsamer vonstattengeht als bei Zellulose, dass aber am Versuchsende (nach 365 Tagen) der Massenverlust durch biologischen Abbau für den erfindungsgemäßen Artikel A-E1 ca. 90 Massen-% der organischen Bestandteile (umfassend das Polybutylensuccinat, Polybutylensuccinat-co-adipat und die Sonnenblumenkernschalen) des erfindungsgemäßen Artikels A-E1 betrug und damit > 90 % des entsprechenden Wertes für die Zellulose erreichte.

Aus diesem Ergebnis kann gefolgert werden, dass die Erhöhung der Kompostierungsgeschwindigkeit sowie die Zunahme des Anteils an kompostierter Masse für den erfindungsgemäßen Artikel A-E1 gegenüber dem nicht-erfindungsgemäßen Vergleichsartikel A-V1 auf den zusätzlichen Gehalt des erfindungsgemäßen Artikels A-E1 an Polybutylensuccinat-co-adipat zurückzuführen ist und dass das Ausmaß dieser Erhöhung der Kompostierungsgeschwindigkeit sowie das Ausmaß dieser Zunahme des Anteils an kompostierter Masse höher war, als es für eine rein additive Wirkung des zusätzlichen Gehalts des erfindungsgemäßen Artikels A-E1 an Polybutylensuccinat-co-adipat (zusätzlich zu dem im nicht-erfindungsgemäßen Vergleichsartikel A-V1 eingesetzten Polybutylensuccinat) zu erwarten gewesen wäre.

## Patentansprüche

1. Einwegartikel, vorzugsweise Kaffeekapsel, umfassend oder bestehend aus einem Verbundmaterial oder Compound,
umfassend
C1) als Polymerbestandteil
Polybutylensuccinat und Polybutylensuccinat-co-adipat,
und/oder
eine Polymermischung oder einen Polymerblend, umfassend
- Polybutylensuccinat
und
- Polybutylensuccinat-co-adipat,
wobei das Massenverhältnis des in dem Polymerbestandteil vorliegenden Polybutylensuccinats zu dem in dem Polymerbestandteil vorliegenden Polybutylensuccinat-co-adipat im Bereich von 10 : 90 bis 90 : 10 liegt,
in einer Gesamtmenge im Bereich von 30 bis 75 Massen-%, bezogen auf die Gesamtmasse des Verbundmaterials oder Compounds,
C2) als ersten Füllstoffbestandteil mindestens ein partikuläres und/oder faserförmiges, Zellulose-haltiges Material,
in einer Gesamtmenge im Bereich von 3 bis 50 Massen-%, bezogen auf die Gesamtmasse des Verbundmaterials oder Compounds,
und
C3) als zweiten Füllstoffbestandteil mindestens ein partikelförmiges anorganisches Material, ausgewählt aus der Gruppe bestehend aus Calciumcarbonat, Tonmineralien und Silikate,
in einer Gesamtmenge im Bereich von 12,5 bis 25 Massen-%, bezogen auf die Gesamtmasse des Verbundmaterials oder Compounds.

2. Einwegartikel nach Anspruch 1, wobei das Massenverhältnis des in dem Polymerbestandteil vorliegenden Polybutylensuccinats zu dem in dem Polymerbestandteil vorliegenden Polybutylensuccinat-co-adipat im Bereich von 20 : 80 bis 80 : 20, bevorzugt von 30 : 70 bis 70 : 30, besonders bevorzugt von 40 : 60 bis 60 : 40 und ganz besonders bevorzugt von 45 : 55 bis 55 : 45, liegt.

3. Einwegartikel nach einem der vorangehenden Ansprüche, wobei
- das Polybutylensuccinat Strukturbestandteile der Formel I 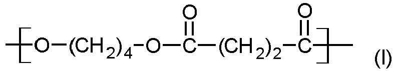 umfasst
und/oder
- das Polybutylensuccinat-co-adipat Strukturbestandteile der Formel II 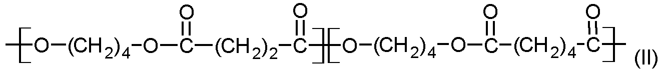 umfasst.

4. Einwegartikel nach einem der vorangehenden Ansprüche, wobei das in dem Polymerbestandteil vorliegende Polybutylensuccinat und/oder das in dem Polymerbestandteil vorliegende Polybutylensuccinat-co-adipat jeweils unabhängig voneinander
- eine Schmelze-Massefließrate MFR im Bereich von 0,5 bis 50 g/10 min, vorzugsweise von 1 bis 40 g/10 min, aufweist, bestimmt nach DIN EN ISO 1133-1:2011, Verfahren A.

5. Einwegartikel nach einem der vorstehenden Ansprüche, wobei
- der Polymerbestandteil C1) in einer Gesamtmenge im Bereich von 35 bis 70 Massen-%, bezogen auf die Gesamtmasse des Verbundmaterials oder Compounds, vorliegt
und
- der erste Füllstoffbestandteil C2) in einer Gesamtmenge im Bereich von 3,5 bis 47,5 Massen-%, bevorzugt von 5 bis 45 Massen-%, bezogen auf die Gesamtmasse des Verbundmaterials oder Compounds, vorliegt.

6. Einwegartikel nach einem der vorstehenden Ansprüche, wobei das partikuläre und/oder faserförmige, Zellulose-haltige Material
- eine oder mehrere Naturfasern und/oder ein oder mehrere Zellulose-Regenerat-Fasern umfasst
und/oder
- ausgewählt ist aus der Gruppe bestehend aus Zellulose, Holz, Flachs, Hanf, Sonnenblumenkernschalen, Bambus, Jute, Kenaf, Ramie, Kokosfasern, Fasern von Stängeln der Ginsterpflanze, Fasern von Stängeln der Hopfenpflanze, Fasern von Blättern und Fruchtständen von Rohrkolbenschilf und deren Mischungen,
wobei vorzugsweise das partikuläre und/oder faserförmige, Zellulose-haltige Material ausgewählt ist aus der Gruppe bestehend aus Holz, Flachs, Hanf, Sonnenblumenkernschalen, und deren Mischungen.

7. Einwegartikel nach einem der vorstehenden Ansprüche, wobei das Verbundmaterial oder Compound zusätzlich umfasst
C4) weitere Zusatz- und/oder Hilfsstoffe, vorzugsweise ausgewählt aus der Gruppe bestehend aus Haftvermittler, Wachse, Gleitmittel, Antioxidantien und Lichtschutzmittel,
vorzugsweise in einer Gesamtmenge im Bereich von 0,1 bis 10 Massen-%, bevorzugt von 0,2 bis 5 Massen-%, bezogen auf die Gesamtmasse des Verbundmaterials.

8. Einwegartikel nach einem der vorstehenden Ansprüche, wobei das mindestens eine partikuläre anorganische Material und/oder der zweite Füllstoffbestandteil C3) mindestens ein partikelförmiges anorganisches Material umfassen bzw. umfasst,
- welches ausgewählt ist aus der Gruppe bestehend aus Calciumcarbonat, Talkum, Talk, Kaolin, Eisenglimmer, Wollastonit-Glimmer, Muskovit-Glimmer, Phlogopit-Glimmer und deren Mischungen,
und vorzugsweise ausgewählt ist aus der Gruppe bestehend aus Talk, Kaolin, Eisenglimmer, Wollastonit-Glimmer, Muskovit-Glimmer, Phlogopit-Glimmer und deren Mischungen
und/oder
- dessen Partikel ein mittleres Aspektverhältnis von ≥ 5 : 1, vorzugsweise von ≥ 7 : 1 und besonders bevorzugt von ≥ 10 : 1 aufweisen.

9. Einwegartikel nach einem der vorstehenden Ansprüche, vorzugsweise kompostierbar, wobei der Einwegartikel eine Kaffeekapsel ist.

10. Verwendung eines Verbundmaterials oder Compounds wie definiert in einem der Ansprüche 1 bis 8 zur oder bei der Herstellung eines, vorzugsweise kompostierbaren, Einwegartikels, vorzugsweise einer Kaffeekapsel.

11. Verfahren zur Herstellung eines Verbundmaterials oder Compounds wie definiert in einem der Ansprüche 1 bis 8, umfassend die Schritte
V1) Herstellen oder Bereitstellen
- einer Polymermischung oder eines Polymerblends umfassend Polybutylensuccinat und Polybutylensuccinat-co-adipat wie definiert in einem der Ansprüche 1 bis 5,
und/oder
- von Polybutylensuccinat und/oder von Polybutylensuccinat-co-adipat,
V2) Herstellen oder Bereitstellen mindestens eines partikulären und/oder faserförmigen, Zellulose-haltigen Materials als ersten Füllstoffbestandteil wie definiert in einem der Ansprüche 1, 5 oder 6,
V3) Herstellen oder Bereitstellen mindestens eines partikelförmigen anorganischen Materials als zweiten Füllstoffbestandteil wie definiert in einem der Ansprüche 1 oder 8,
V4) Vereinigen
- der Polymermischung oder des Polymerblends aus Schritt V1) und/oder
- des Polybutylensuccinats und/oder des Polybutylensuccinat-co-adipats aus Schritt V1),
mit dem mindestens einen partikulären und/oder faserförmigen, Zellulose-haltigen Material aus Schritt V2)
und zusätzlich mit dem mindestens einen partikelförmigen anorganischen Material aus Schritt V3),
vorzugsweise umfassend einen Schritt des Compoundierens, besonders bevorzugt umfassend einen Schritt der Schmelzextrusion,
so dass das oder ein Verbundmaterial oder der oder ein Compound resultiert.

12. Verfahren zur Herstellung eines Einwegartikels, umfassend die Schritte
V5) Herstellen oder Bereitstellen eines Verbundmaterials oder Compounds umfassend als Polymerbestandteil
- Polybutylensuccinat und Polybutylensuccinat-co-adipat
und/oder
- eine Polymermischung oder einen Polymerblend wie definiert in einem der Ansprüche 1 bis 5,
und
einen oder mehrere organische und anorganische Füllstoffbestandteile,
wobei das Herstellen oder Bereitstellen eines Verbundmaterials oder Compounds ausgeführt wird durch
- Bereitstellen eines Verbundmaterials oder Compounds wie definiert in einem der Ansprüche 1 bis 8
und/oder
- Herstellen eines Verbundmaterials oder Compounds nach einem Verfahren gemäß Anspruch 11;
und
V6) Formen des Verbundmaterials oder Compounds, vorzugsweise umfassend mindestens einen Schritt ausgewählt aus der Gruppe bestehend aus
- Extrusion, vorzugsweise umfassend Folienextrusion, Blasfolienextrusion, Extrusionsblasformen und Schaumextrusion;
- Spritzgießen,
- Tiefziehen
und/oder
- Thermoformen.

## Claims

1. Single-use article, preferably coffee capsule, comprising or consisting of a composite material or compound as claimed in either of claims 5 and 6,
comprising
C1) as polymer constituent
polybutylene succinate and polybutylene succinate-co-adipate,
and/or
a polymer mixture or a polymer blend, comprising
- polybutylene succinate
and
- polybutylene succinate-co-adipate,
wherein the mass ratio of the polybutylene succinate present in the polymer mixture to the polybutylene succinate-co-adipate present in the polymer mixture is in the range from 10:90 to 90:10,
in a total amount in the range from 30% to 75% by mass based on the total mass of the composite material or compound,
C2) as first filler constituent at least one particulate and/or fibrous, cellulose-containing material,
in a total amount in the range from 3% to 50% by mass based on the total mass of the composite material or compound,
and
C3) as second filler constituent at least one particulate inorganic material selected from the group consisting of calcium carbonate, clay minerals and silicates, in a total amount in the range from 12.5% to 25% by mass based on the total mass of the composite material.

2. Single-use article as claimed in claim 1, wherein the mass ratio of the polybutylene succinate present in the polymer constituent to the polybutylene succinate-co-adipate present in the polymer constituent is in the range from 20:80 to 80:20, preferably from 30:70 to 70:30, especially preferably from 40:60 to 60:40 and most preferably from 45:55 to 55:45.

3. Single-use article as claimed in either of the preceding claims, wherein
- the polybutylene succinate comprises structural constituents of the formula I 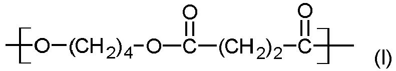 and/or
- the polybutylene succinate-co-adipate comprises structural constituents of the formula II

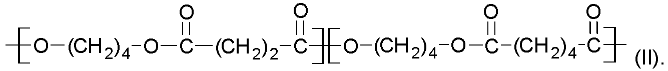

4. Single-use article as claimed in any of the preceding claims, wherein the polybutylene succinate present in the polymer constituent and/or the polybutylene succinate-co-adipate present in the polymer constituent each independently have
- a melt flow rate MFR in the range from 0.5 to 50 g/10 min, preferably from 1 to 40 g/10 min, determined to DIN EN ISO 1133-1:2011, Method A.

5. Single-use article as claimed in any of the previous claims, wherein
- the polymer constituent C1) is present in a total amount in the range from 35% to 70% by mass, based on the total mass of the composite material or compound,
and
- the first filler constituent C2) is present in a total amount in the range from 3.5% to 47.5% by mass, preferably from 5% to 45% by mass, based on the total mass of the composite material or compound.

6. Single-use article as claimed in any of the previous claims, wherein the particulate and/or fibrous cellulose-containing material
- comprises one or more natural fibers and/or one or more regenerated cellulose fibers
and/or
- is selected from the group consisting of cellulose, wood, flax, hemp, sunflower seed shells, bamboo, jute, kenaf, ramie, coconut fibers, fibers from stems of the gorse plant, fibers from stems of the hop plant, fibers from leaves and infructescences of bulrushes, and mixtures thereof,
wherein the particulate and/or fibrous cellulose-containing material is selected from the group consisting of wood, flax, hemp, sunflower seed shells, and mixtures thereof.

7. Single-use article as claimed in any of the previous claims, wherein the composite material or compound additionally comprises
C4) further additives and/or auxiliaries, preferably selected from the group consisting of adhesion promoters, waxes, lubricants, antioxidants and light stabilizers,
preferably in a total amount in the range from 0.1% to 10% by mass, preferably from 0.2% to 5% by mass, based on the total mass of the composite material.

8. Single-use article as claimed in any of the previous claims, wherein the at least one particulate inorganic material and/or the second filler constituent C3) comprise(s) at least one particulate inorganic material,
- selected from the group consisting of calcium carbonate, talcum, talc, kaolin, iron mica, wollastonite mica, muscovite mica, phlogopite mica and mixtures thereof,
and preferably selected from the group consisting of talc, kaolin, iron mica, wollastonite mica, muscovite mica, phlogopite mica and mixtures thereof
and/or
- the particles of which have an average aspect ratio of ≥ 5:1, preferably of ≥ 7:1 and more preferably of ≥ 10:1.

9. Single-use article as claimed in any of the previous claims, preferably compostable, wherein the single-use article is a coffee capsule.

10. The use of a composite material or compound as defined in any of the claims 1 to 8 for or in the production of a preferably compostable single-use article, preferably a coffee capsule.

11. A process for producing a composite material or compound as defined in any of the claims 1 to 8, comprising the steps of
V1) producing or providing
- a polymer mixture or polymer blend comprising polybutylene succinate and polybutylene succinate-co-adipate as defined in any of claims 1 to 5,
and/or
- polybutylene succinate and/or polybutylene succinate-co-adipate,
V2) producing or providing at least one particulate and/or fibrous, cellulose-containing material as first filler constituent as defined in any of claims 1, 5 or 6,
V3) producing or providing at least one particulate inorganic material as second filler constituent as defined in any of claims 1 or 8,
V4) combining
- the polymer mixture or polymer blend from step V1)
and/or
- the polybutylene succinate and/or polybutylene succinate-co-adipate from step V1),
with the at least one particulate and/or fibrous, cellulose-containing material from step V2)
and additionally with the at least one particulate inorganic material from step V3),
preferably comprising a step of compounding, more preferably comprising a step of melt extrusion,
so as to result in the or a composite material or the or a compound.

12. A process for producing a single-use article, comprising the steps of
V5) producing or providing a composite material or compound comprising, as polymer constituent,
- polybutylene succinate and polybutylene succinate-co-adipate
and/or
- a polymer mixture or polymer blend as defined in any of claims 1 to 5,
and
one or more organic and inorganic filler constituents,
where the producing or providing of a composite material or compound is executed by
- providing a composite material or compound as defined in any of claims 1 to 8
and/or
- producing a composite material or compound by a process as claimed in claim 11;
and
V6) forming the composite material or compound, preferably comprising at least one step selected from the group consisting of
- extrusion, preferably comprising film extrusion, blown film extrusion, extrusion blow molding and foam extrusion;
- injection molding,
- deep drawing
and/or
- thermoforming.

## Revendications

1. Article à usage unique, de préférence capsule de café, comprenant ou constitué d'un matériau composite ou d'un compound,
comprenant
C1) en tant que constituant polymère
du polybutylène succinate et un polybutylène succinate-co-adipate,
et/ou
un mélange de polymères ou un assemblage de polymères, comprenant
- du polybutylène succinate
et
- du polybutylène succinate-co-adipate,
dans lequel le rapport massique du polybutylène succinate présent dans le constituant polymère par rapport au polybutylène succinate-co-adipate présent dans le constituant polymère se situe dans la plage de 10:90 à 90:10,
en une quantité totale dans la plage de 30 à 75 % en poids par rapport au poids total du matériau composite ou du compound,
C2) en tant qu'un premier constituant de charge au moins un matériau contenant de la cellulose particulaire et/ou sous forme de fibres,
en une quantité totale dans la plage de 3 à 50 % en poids par rapport au poids total du matériau composite ou du compound,
et
C3) en tant que deuxième constituant de charge au moins un matériau inorganique particulaire choisi parmi le groupe constitué de carbonate de calcium, de minéraux argileux et de silicates,
en une quantité totale dans la plage de 12,5 à 25 % en poids par rapport au poids total du matériau composite ou du compound.

2. Article à usage unique selon la revendication 1, dans lequel le rapport massique du polybutylène succinate présent dans le constituant polymère par rapport au polybutylène succinate-co-adipate présent dans le constituant polymère se situe dans la plage de 20:80 à 80:20, de manière préférée de 30:70 à 70:30, de manière particulièrement préférée de 40:60 à 60:40 et de manière très particulièrement préférée de 45:55 à 55:45.

3. Article à usage unique selon l'une quelconque des revendications précédentes, dans lequel
- le polybutylène succinate comprend des constituants structurels de la formule I 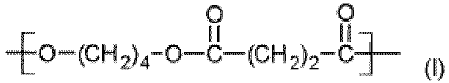 et/ou
- le polybutylène succinate-co-adipate comprend des constituants structurels de la formule Il

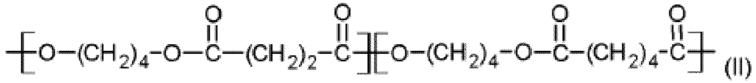

4. Article à usage unique selon l'une quelconque des revendications précédentes, dans lequel le polybutylène succinate présent dans le constituant polymère et/ou le polybutylène succinate-co-adipate présent dans le constituant polymère présentent respectivement indépendamment l'un de l'autre
- un indice de fluidité à chaud en masse MFR dans la plage de 0,5 à 50 g/10 min, de préférence de 1 à 40 g/10 min, défini selon la norme DIN EN ISO 1133-1:2011, méthode A.

5. Article à usage unique selon l'une quelconque des revendications précédentes, dans lequel
- le constituant polymère C1) est présent en une quantité totale dans la plage de 35 à 70 % en pois par rapport au poids total du matériau composite ou du compound
et
- le premier composant de charge C2) est présent en une quantité totale dans la plage de 3,5 à 47,5 % en poids, de manière préférée de 5 à 45 % en poids par rapport au poids total du matériau composite ou du compound.

6. Article à usage unique selon l'une quelconque des revendications précédentes, dans lequel le matériau contenant de la cellulose particulaire et/ou sous forme de fibres
- comprend une ou plusieurs fibres naturelles et/ou une ou plusieurs fibres régénérées de cellulose
et/ou
- est choisi parmi le groupe constitué de cellulose, de bois, de lin, de chanvre, de graines de tournesol, de bambou, de jute, de kenaf, de ramie, de fibres de coco, de fibres de tiges de genêts à balais, fibres de tiges de la plante du houblon, de fibres de feuilles et d'infrutescences de roseaux et de leurs mélanges,
dans lequel de préférence le matériau contenant de la cellulose particulaire et/ou sous forme de fibres est choisi parmi le groupe constitué de bois, de lin, de chanvre, de graines de tournesol et de leurs mélanges.

7. Article à usage unique selon l'une quelconque des revendications précédentes, dans lequel le matériau composite ou le compound comprend en supplément
C4) d'autres additifs et/ou excipients, de préférence choisis parmi le groupe constitué de promoteur d'adhérence, de cires, de lubrifiant, d'antioxydants et d'agent protecteur contre la lumière,
de préférence en une quantité totale dans la plage de 0,1 à 10 % en poids, de manière préférée de 0,2 à 5 % en poids par rapport au poids total du matériau composite.

8. Article à usage unique selon l'une quelconque des revendications précédentes, dans lequel l'au moins un matériau inorganique particulaire et/ou le deuxième constituant de charge C3) comprennent ou comprend au moins un matériau inorganique sous forme de particules,
- lequel est choisi parmi le groupe constitué de carbonate de calcium, de talc, de talc, de kaolin, de mica de fer, de mica de wollastonite, de mica de muscovite, de mica de phlogopite et de leurs mélanges,
et est choisi de préférence parmi le groupe constitué de talc, de kaolin, de mica de fer, de mica de wollastonite, de mica de muscovite, de mica de phlogopite et de leurs mélanges,
et/ou
- dont des particules présentent un rapport d'aspect moyen ≥ 5:1, de préférence ≥ 7:1 et de manière particulièrement préférée ≥ 10:1.

9. Article à usage unique selon l'une quelconque des revendications précédentes, de préférence compostable, dans lequel l'article à usage unique est une capsule de café.

10. Utilisation d'un matériau composite ou d'un compound tel que défini dans l'une quelconque des revendications 1 à 8 pour la fabrication ou lors de la fabrication d'un article à usage unique, de préférence compostable, de préférence d'une capsule de café.

11. Procédé de fabrication d'un matériau composite ou d'un compound tel que défini dans l'une quelconque des revendications 1 à 8, comprenant les étapes
V1) de fabrication ou de mise à disposition
- d'un mélange de polymères ou d'un assemblage de polymères comprenant du polybutylène succinate et du polybutylène succinate-co-adipate tels que définis dans l'une quelconque des revendications 1 à 5,
et/ou
- de polybutylène succinate et/ou de polybutylène succinate-co-adipate,
V2) de fabrication ou de mise à disposition d'un matériau contenant de la cellulose particulaire et/ou sous forme de fibres en tant que premier constituant de charge tel que défini dans l'une quelconque des revendications 1, 5 ou 6,
V3) de fabrication ou de mise à disposition d'un matériau inorganique sous forme de particules en tant que deuxième constituant de charge tel que défini dans l'une quelconque des revendications 1 ou 8,
V4) de combinaison
- du mélange de polymères ou de l'assemblage de polymères issu de l'étape V1)
et/ou
- du polybutylène succinate et/ou du polybutylène succinate-co-adipate issus de l'étape V1),
à l'au moins un matériau contenant de la cellulose particulaire et/ou sous forme de fibres issu de l'étape V2)
et en supplément à l'au moins un matériau inorganique sous forme de particules issu de l'étape V3),
de préférence comprenant une étape du compoundage, de manière particulièrement préférée comprenant une étape de l'extrusion de masse en fusion,
de telle sorte qu'il en résulte le ou un matériau composite ou le ou un compound.

12. Procédé de fabrication d'un article à usage unique, comprenant les étapes
V5) de fabrication ou de mise à disposition d'un matériau composite ou d'un compound comprenant en tant que constituant polymère
- du polybutylène succinate et/ou du polybutylène succinate-co-adipate et/ou
- un mélange de polymères ou un assemblage de polymères tel que défini dans l'une quelconque des revendications 1 à 5,
et
un ou plusieurs constituants de charge organiques et inorganiques,
dans lequel la fabrication ou la mise à disposition d'un matériau composite ou d'un compound est effectuée par
- la mise à disposition d'un matériau composite ou d'un compound tel que défini dans l'une quelconque des revendications 1 à 8
et/ou
- la fabrication d'un matériau composite ou d'un compound selon un procédé selon la revendication 11 ;
et
V6) la formation du matériau composite ou du compound, de préférence comprenant au moins une étape choisie parmi le groupe constitué de
- l'extrusion, de préférence comprenant l'extrusion de films, l'extrusion de films soufflés, le moulage d'extrusion-soufflage et l'extrusion de mousse ;
- la coulée par injection,
- l'emboutissage,
et/ou
- le thermoformage.
